Europäisches Patentamt

European Patent Office

Office européen des brevets

(11) Veröffentlichungsnummer: **0 335 240**
**A2**

## EUROPÄISCHE PATENTANMELDUNG

(21) Anmeldenummer: 89105104.7

(22) Anmeldetag: 22.03.89

(51) Int. Cl.⁴: **B08B 3/12** , **B01D 41/04**

(30) Priorität: 25.03.88 DE 3810137

(43) Veröffentlichungstag der Anmeldung:
04.10.89 Patentblatt 89/40

(84) Benannte Vertragsstaaten:
AT BE CH DE ES FR GB IT LI LU NL SE

(71) Anmelder: Gradewald, Reinhold
Pinneberger Strasse 90
D-2000 Wedel/Holstein(DE)

(72) Erfinder: Gradewald, Reinhold
Pinneberger Strasse 90
D-2000 Wedel/Holstein(DE)

(54) Verfahren zum Reinigen von Hohlkörpern und Einrichtung zur Durchführung des Verfahrens.

(57) Es wird ein Verfahren zum Reinigen von Hohl-körpern wie Filter, Katalysatoren u. ä., unter Anwen-dung von Ultraschall beschrieben sowie eine Einrich-tung zur Durchführung des Verfahrens. Dabei wird Reinigungsflüssigkeit in einem Pumpenkreislauf ge-führt und der zu reinigende Hohlkörper mit seinem Gehäuse als die Reinigungsflüssigkeit leitender Teil des Kreislaufsystems eingesetzt. Zu diesem Zweck ist ein Pressengestell vorgesehen, in welches der Hohlkörper einspannbar ist, wobei gleichzeitig ein flüssigkeitsdichter Anschluß der Druck- und Rück-führleitung erfolgt.

Ein an dem Anschluß der Rückführleitung in den Hohlkörper hineinragender Ultraschall-Schwinger sorgt für eine direkte Beschallung der in dem Hohl-körper befindlichen und strömenden Reinigungsflüs-sigkeit.

EP 0 335 240 A2

## Verfahren zum Reinigen von Hohlkörpern und Einrichtung zur Durchführung des Verfahrens

Die Erfindung betrifft ein Verfahren zum Reinigen von von Gasen oder flüssigkeitdurchströmbaren Hohlkörpern wie Filtern, Katalysatoren und ähnlicher bzw. von in diesen Hohlkörpern befindlichen Einbauteilen, wobei die Reinigung unter Einwirkung eines mit Ultraschall beschallten flüssigen Reinigungsmediums erfolgt, welches in einem Pumpenkreislauf geführt und gefiltert wird. Sowie eine Einrichtung zur Durchführung des Verfahrens mit einem Sammelbehälter für die Reinigungsflüssigkeit, einer dieser aus dem Sammelbehälter entnehmenden und über eine Druckleitung abgegebenen Pumpe, sowie mit einer über einen Filter mit dem Sammelbehälter verbundenen Rückführleitung.

Aus der DE-OS3425552 ist eine Anordnung zum Reinigen von Filterkegeln bekannt, bei welcher diese in eine Reinigungsflüssigkeit getaucht werden, welche mit Ultraschall beaufschlagt wird. Zu diesem Zweck wird der zu reinigende Filterkegel auf eine die Reinigungsflüssigkeit in den Innenraum des Filterkegels leitende Düse aufgesetzt und diese gegen einen topfartigen Behälter dichtend angesetzt, so daß der Filterkegel in den Behälter hineinragt. Der Boden des Behälters ist mit einem steuerbaren Abfluß versehen. Zur Durchführung des Reinigunsprozesses wird der Behälter durch einen außenliegenden Ultraschallgeber in Schwingungen versetzt, wenn die Reinigungsflüssigkeit gegen den geschlossenen Abfluß den Behälter gefüllt hat.

Wie nicht zuletzt aus der zugehörigen Zeichnung hervorgeht, erfordert eine derartige Anordnung des Ultraschallgebers eine erhebliche Leistung, um in dem Behälter die die mechanische Reinigungswirkung entfaltende Kavitation in der Reinigungsflüssigkeit zu erzeugen.Das hat seine Ursache in den Über tragungsverlusten zwischen Ultraschallgeber und Behälter und darin, daß dessen gesamte Wandung als Schallvermittler zu fungieren hat.

Es ist die Aufgabe der Erfindung, ein Verfahren anzugeben, dessen Anwendung ermöglicht, mindestens mit einer Öffnung versehener Hohlkörper sowie etwa in diesen befindliche Einbauteile, d. h. beispielsweise Filter, Katalysatoren, Kondensatoren u. ä., in und/oder mit ihren Gehäusen auf höchst ökonomische und umweltschonende Art und Weise zu reinigen.

Diese Aufgabe wird erfindungsgemäß durch ein Verfahren gelöst, welches dadurch gekennzeichnet ist, daß der zu reinigende Hohlkörper als die Reinigungsflüssigkeit führender Teil des Kreislaufsystems eingesetzt und die in dem Hohlkörper befindliche Reinigungsflüssigkeit direkt mit Ultraschall beaufschlagt wird.

Die mit diesem Verfahren erzielbaren Vorteile bestehen insbesondere darin, daß eine Beschallung hoher Intensität bei relativ geringer Leistung ermöglicht wird und damit eine sehr effektive Reinigung erzielbar ist, wobei der apparative Aufwand vergleichsweise gering ist. Dabei kann die Effizienz dieses Verfahrens noch dadurch gesteigert werden, daß die Beschallung der Reinigungsflüssigkeit von der Zuflußseite des Hohlkörpers her und gegen die Durchströmrichtung der Reinigungsflüssigkeit erfolgt.

Die Anwendung des Verfahrens erfolgt zweckmäßig durch eine Einrichtung, welche dadurch gekennzeichnet sein kann, daß mindestens die Druckleitung einen flexiblen Abschnitt aufweist, daß diese wie auch die Rückführleitung jeweils mit einem Anschlußelement zum lösbaren Anschluß der Leitungen an den Anschlußöffnungen des Hohlkörpers verbunden sind, und daß dem mit der Rückführleitung in Verbindung stehenden Anschlußelement ein Ultraschall-Schwinger hoher Energiedichte zugeordnet ist, welcher in den Hohlkörper hineinragt, wobei eine besonders intensive Reinigung dadurch erzielbar ist, daß der Ultraschall-Schwinger als Kugelstrahler ausgebildet ist. Dabei kann eine leicht vorzunehmende Anpassung an das zu reinigende Objekt dadurch erreicht werden, daß der Ultraschall-Schwinger axial einstellbar angeordnet ist.

Zwecks einfacher Handhabung der Einrichtung und Erzielung hoher Durchsatzleistung kann ein von Hand oder kraftbetrieben betätigbares Pressengestell zum Einspannen des zu reinigenden Hohlkörpers vorgesehen sein, wobei die Anschlußelemente in die relativ zueinander bewegbaren Teile des Pressengestells integriert und mit Dichtmitteln versehen sind, die eine flüssigkeitsdichte Anlage der Anschlußelemente an den Anschlußöffnungen des zu reinigenden Hohlkörpers gewährleisten.

Schließlich kann die Rückführleitung einen optisch überwachbaren Abschnitt zur Kontrolle des Verschmutzungsgrades der Reinigungsflüssigkeit aufweisen. Durch eine photoelektrische Einrichtung in diesem Bereich kann die Zeit der Aktivierung der Pumpe in Abhängigkeit von dem Trübungsgrad der ablaufenden Reinigungsflüssigkeit gesteuert werden.

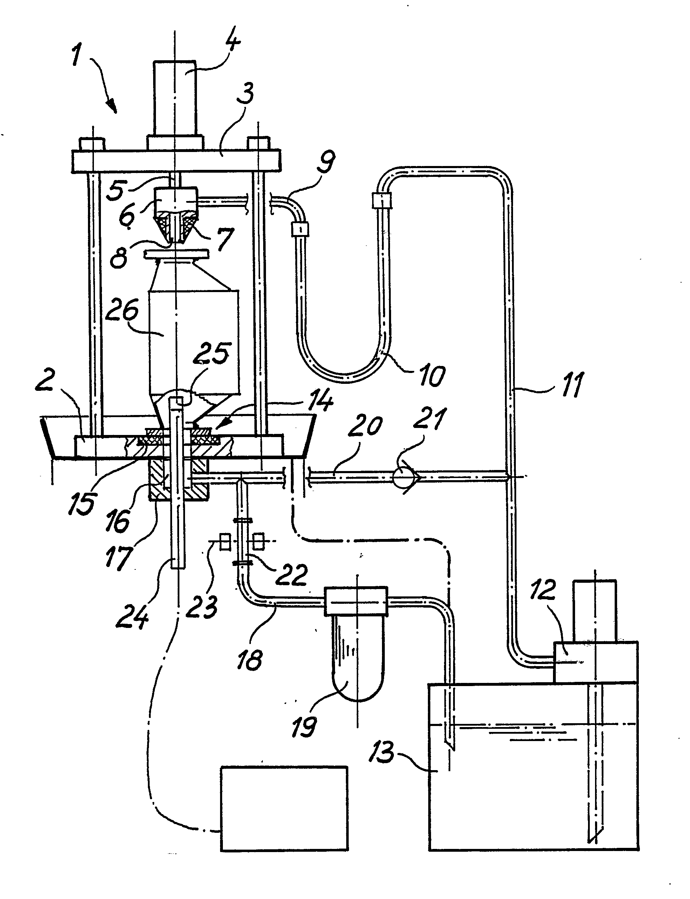

Die Erfindung wird nachfolgend anhand eines in der Zeichnung dargestellten Ausführungsbeispieles näher erläutert.

Die einzige Figur zeigt in schematisierter Darstellung den Aufbau einer Anlage zur Durchführung des erfindungsgemäßen Verfahrens. Sie besteht im wesentlichen aus einem Pressengestell 1 mit einer Grundplatte 2 und einem Joch 3, welche durch Holme verbunden und auf Distanz gehalten werden. Das Joch 3 ist Träger eines beispielsweise durch Druckluft betätigbaren Kolbenzylinders 4, welcher in der Achse des Pressengestells 1 angeordnet ist und mit seiner Kolbenstange 5 in den Raum zwischen dem Joch 3 und der Grundplatte 2 hineinragt. Die Kolbenstange 5 trägt an ihrem freien Ende ein Anschlußelement 6 mit einem gegen die Grundplatte 2 weisenden elastischen Paßelement 7, beispielsweise in Form eines Paßkegels aus einem Elastomer. Das Paßelement 7 ist mit einer axialen Bohrung 8 versehen, die mit einer Zulaufleitung 9 verbunden ist, welche über einen flexiblen Abschnitt 10 mit der Druckleitung 11 einer Pumpe 12 in Verbindung steht. Die Pumpe 12 ist einem Sammelbehälter 13 für die Reinigungsflüssigkeit zugeordnet, in welche der Saugstutzen der Pumpe 12 eintaucht.

Die Grundplatte 2 ist mit einem zentral angeordnetem Anschlußelement 14, beispielsweise in Form einer Platte 15 aus einem Elastomer ausgestattet. Die Platte 15 ist mit einem axialen, der Bohrung 8 gegenüberstehenden Durchbruch 16 versehen, der auch die Grundplatte 2 durchläuft. Dieser setzt sich in einem Anschlußflansch 17 fort und steht seitlich mit einer Rückführleitung 18 in Verbindung, die über einen Filter 19 auf den Sammelbehälter 13 geführt ist und mit einer Bypass-Verbindung 20 zu der Druckleitung 11 versehen ist, in der sich ein in Richtung Abführleitung öffnendes vorgespanntes Rückschlagventil 21 befindet. Die Rückführleitung 18 weist einen durchsichtigen Abschnitt 22 auf, der zwischen Sender und Empfänger einer photoelektrischen Einrichtung 23 angeordnet ist. In dem Durchbruch 16 ragt ein in dem Anschlußflansch 17 gehaltener und unter Abdichtung axial verschiebbarer Halter 24 unter Belasssen eines Ringspaltes zwischen diesem und der Wandung des Durchbruches 16 auf. Der Halter 22 trägt an seinem dem Joch 3 zuweisenden Ende einen Ultraschall-Schwinger 25.

In Anwendung der erfindungsgemäßen Einrichtung wird ein zu reinigender Hohlkörper 26, beispielsweise ein Katalysator, in das auseinandergefahrene Pressengestell 1 eingesetzt und zwar so, daß der Anschlußflansch der Gasaustrittsöffnung auf der Platte 15 zu liegen kommt und der Ultraschall-Schwinger 25 in die Vorkammer des Katalysators hineinragt. Alsdann wird der Kolbenzylinder 4 betätigt, so daß das mit seiner Kolbenstange 5 verbundene elastische Passelement 7 gegen die andere Anschlußöffnung des Katalysators verfahren wird und schließlich durch Eindringen in diese Anschlußöffnung an den Flanken des Passkegels dicht gesetzt wird. Durch Einschalten der Pumpe 12 wird nun das Katalysatorgehäuse über die Druckleitung 11 und durch die Bohrung 8 des Passelementes 7 mit Reinigungsflüssigkeit gefüllt.

Ist der Katalysator weitgehend zugesetzt, so steigt in der Druckleitung 11 der Flüssigkeitsdruck an, mit der Folge, daß das Rückschlagventil 21 öffnet und das Katalysatorgehäuse gleichzeitig von der Rückführleitung 18 her mit Reinigungsflüssigkeit gefüllt wird. Die Füllsicherheit kann dabei durch eine nichtgezeigte, zweckmäßigerweise zwischen Filter 19 und Anschlußflansch 17 in die Rückführleitung 18 eingebaute Drossel verbessert werden. Nachdem das Katalysatorgehäuse mit Reinigungsflüssigkeit gefüllt ist, kann nun der Ultraschall-Schwinger 25 aktiviert werden. Die dadurch in dem Katalysatorgehäuse erzeugte Kavitation breitet sich gegen die Strömung der Reinigungsflüssigkeit aus und bewirkt eine intensive Reinigung des gesamten Innenbereiches des Katalysators. Die gelösten Verbrennungsrückstände werden durch die Strömung der Reinigungsflüssigkeit in die Rückführleitung 18 gespült und im Filter 19 zurückgehalten, so daß jeweils gereinigte Reinigungsflüssigkeit in den Sammelbehälter 13 zurückfließt. Durch die photoelektrische Einrichtung 23 in Verbindung mit dem durchsichtigen Abschnitt 22 in der Rückführleitung 18 kann eine automatische Überwachung des Reinigungsvorganges erfolgen, indem die Pumpe 12, gesteuert durch die photoelektrische Einrichtung 23, abgeschaltet wird, wenn der Empfänger dieser Einrichtung vollen Lichteinfall registriert.

Das erfindungsgemäße Verfahren läßt sich auch bei der Reinigung von Gegenständen mit einseitig angeordneten Anschlüssen und auch solchen mit einer den Zulauf und den Ablauf aufnehmenden Öffnung anwenden. Eine zur Handhabung solcher Gegenstände geeignete Einrichtung kann ebenfalls ein Pressengestell umfassen, wobei die Anschlußelemente entsprechend zu modifizieren sind.

## Ansprüche

1. Verfahren zum Reinigen von von Gasen oder Flüssigkeiten durchströmbaren Hohlkörpern bzw. von in diesen Hohlkörpern befindlichen Einbauteilen, wie Filtern, Katalysatoren, u. ä., wobei die Reinigung unter Einwirkung eines mit Ultraschall beschallten Reinigungsmediums erfolgt, welches in einem Pumpenkreislauf geführt und gefiltert wird, dadurch gekennzeichnet, daß der zu reinigende Hohlkörper 26 als die Reinigungsflüssigkeit führender Teil des Kreislaufsystems verwendet wird.

2. Verfahren nach Anspruch 1, dadurch gekennzeichnet, daß der Hohlkörper 26 von dem Reinigungsmedium in gegenüber bestimmungsgemäßem Einsatz entgegengesetzter Durchströmrichtung durchflossen wird, und daß die Beschallung des Reinigungsmediums von der Zuflußseite des Hohlkörpers 26 her und gegen die Durchströmrichtung des Reinigungsmediums erfolgt.

3. Einrichtung zur Durchführung des Verfahrens nach den Ansprüchen 1 oder 2, mit einem Sammelbehälter für die Reinigungsflüssigkeit, einer diese aus dem Sammelbehälter entnehmenden und über eine Druckleitung abgebenden Pumpe, sowie mit einer über einen Filter mit dem Sammelbehälter verbundenen Rückführleitung, dadurch gekennzeichnet, daß mindestens die Druckleitung 11 einen flexiblen Abschnitt 10 aufweist, daß dieser, wie auch die Rückführleitung 18, jeweils mit einem Anschlußelement 6 bzw. 14 zum lösbaren Anschluß der Leitungen 11 bzw. 18 an den Anschlußöffnungen des Hohlkörpers 26 verbunden sind, und das dem mit der Rückführleitung 18 in Verbindung stehenden Anschlußelement 14 ein Ultraschall-Schwinger 25 hoher Energiedichte zugeordnet ist, welcher in den Hohlkörper 26 hineinragt.

4. Einrichtung nach Anspruch 3, dadruch gekennzeichnet, daß der Ultraschall-Schwinger 25 als Kugelstrahler ausgebildet ist.

5. Einrichtung nach Anspruch 3 oder 4, dadurch gekennzeichnet, daß der Ultraschall-Schwinger 25 axial einstellbar angeordnet ist.

6. Einrichtung nach Anspruch 3, gekennzeichnet durch ein von Hand oder Kraft betrieben betätigbares Pressengestell 1 zum Einspannen des zu reinigenden Hohlkörpers 26, wobei die Anschlußelemente 6 + 14 in die relativ zueinander bewegbarenTeile des Pressengestells 1 integriert und mit Dichtmitteln versehen sind, die eine flüssigkeitsdichte Anlage der Anschlußelemente 6 + 14 an den Anschlußöffnungen des zu reinigenden Hohlkörpers 26 gewährleisten.

7. Einrichtung nach einem der Ansprüche 3-6, dadurch gekennzeichnet, daß die Rückführleitung 18 einen optisch überwachbaren Abschnitt 22 zur Kontrolle des Verschmutzungsgrades der Reinigungsflüssigkeit aufweist.

8. Einrichtung nach Anspruch 7, dadurch gekennzeichnet, daß eine photoelektrische Einrichtung 23 zur Überwachung des Abschnittes 22 vorgesehen ist, welcher die Zeit der Aktivierung der Pumpe 12 in Abhängigkeit von dem Trübungsgrad der ablaufenden Reinigungsflüssigkeit steuert.